# EUROPÄISCHE PATENTSCHRIFT

(11) **EP 1 918 538 B1**
(45) Veröffentlichungstag und Bekanntmachung des Hinweises auf die Patenterteilung: **07.01.2009**
(21) Anmeldenummer: 06022489.6
(22) Anmeldetag: 27.10.2006
(51) Int. Cl.: F01M 13/00, F16K 7/00

(54) **Ventil zur Regelung von Drücken**
Pressure control valve
Soupape de régulation de pression

(43) Veröffentlichungstag der Anmeldung: 07.05.2008
(73) Patentinhaber: Carl Freudenberg KG, 69469 Weinheim (DE)
(72) Erfinder: Bittner, Jörg, Dipl.-Ing., 69514 Laudenbach (DE); Daume, Volker, Dipl.-Ing., 69439 Hirschhorn (DE); Driemer, Siegfried, 64658 Fürth (DE)

(56) Entgegenhaltungen:
- WO-A-99/10646
- DE-A1- 3 023 515
- DE-A1- 4 037 172
- DE-A1- 10 162 794
- DE-A1- 10 248 125
- DE-U1- 8 709 978
- DE-U1- 20 221 239

## Beschreibung

### Technisches Gebiet

Die Erfindung betrifft ein Ventil gemäß dem Oberbegriff des Patentanspruchs 1,

### Stand der Technik

Derartige Ventile sind aus dem Stand der Technik bereits bekannt (siehe beispielsweise DE-A-102 48 125). Die gattungsbildenden Ventile finden Verwendung als Regelventile zum Abbau eines Überdrucks. Insbesondere kann mit solchen Ventilen der Druck, insbesondere der Überdruck, in einem Kurbelgehäuse abgebaut werden.

Die DE 102 48 125 A1, die DE 40 37 172 A1, die DE 101 62 794 A1, die DE 30 23 515 A1, die DE 87 09 978 U1 und die WO 99/10646 A1 offenbaren elektromagnetisch betätigte Ventils. Bei diesen Ventilen wird das Dichtelement durch eine elektromagnetische Stellvorrichtung betätigt.

In Kurbelgehäusen ist es erforderlich, dass ein bestimmter Unterdruck relativ zum atmosphärischen Druck vorherrscht.

Bei Verbrennungsmotoren treten aufgrund von Leckagen Verbrennungsgase aus den Verbrennungsräumen in das Kurbelgehäuse ein. Hiermit ist ein Überdruckaufbau innerhalb des Kurbelgehäuses verbunden. Dabei wird die erste Zuleitung mit dem Kurbelgehäuse verbunden und die zweite Zuleitung mit einem Saugaggregat, beispielsweise einem Motor.

Wenn nun der Druck im Kurbelgehäuse zu hoch wird, wird das Dichtelement derart bewegt, dass das Saugaggregat Gase aus dem Kurbelgehäuse absaugen kann. Hierbei ist jedoch problematisch, dass durch das Saugaggregat ein zu hoher Unterdruck im Kurbelgehäuse entstehen kann, der zu Schädigungen von Dichtungen und Lagern des Kurbelwellengehäuses führen kann. Insbesondere können Radialwellendichtringe dadurch geschädigt werden, dass deren Lippen angehoben werden.

Üblicherweise wird eine Strömungsverbindung zwischen den beiden Zuleitungen dann hergestellt, wenn eine vorgegebene Druckdifferenz zwischen dem Druck im Kurbelgehäuse und dem Druck in einem Druckraum des Ventils überschritten wird.

Bei den aus dem Stand der Technik bekannten Ventilen ist jedoch problematisch, dass der durch das Saugaggregat erzeugte Unterdruck das Öffnungsverhalten bzw. das Ansprechen des Dichtelements beeinflusst. Dies hängt damit zusammen, dass der vom Saugaggregat erzeugte Unterdruck permanent auf das am Dichtsitz anliegende Dichtelement derart einwirkt, dass dessen Bewegung durch Druckkräfte beeinflusst wird. Insoweit kann mit den gattungsbildenden Ventilen kein präzises und definiertes Ansprechen des Dichtelements und somit kein fein einregelbares Öffnungsverhalten des Ventils gewährleistet werden.

### Darstellung der Erfindung

Der Erfindung liegt daher die Aufgabe zugrunde, Ventile der eingangs genannten Art derart auszugestalten und weiterzubilden, dass ein fein abstimmbares Öffnungsverhalten des Ventils gewährleistet ist.

Die vorliegende Erfindung löst die zuvor genannte Aufgabe durch die Merkmale des Patentanspruchs 1. Danach ist ein Ventil der eingangs genannten Art dadurch gekennzeichnet, dass der zweite Druckraum durch einen Verbindungskanal mit der Atmosphäre verbindbar ist.

Erfindungsgemäß ist erkannt worden, dass durch ein Saugaggregat im ersten Druckraum ein Unterdruck auf das Dichtelement wirkt und somit dessen Öffnungsverhalten beeinflusst. In einem zweiten Schritt ist sodann erkannt worden, dass ein präzises Öffnungsverhalten des Ventils dadurch erreicht werden kann, dass der Einfluss des Saugaggregats minimiert wird. Schließlich ist erkannt worden, dass die Abstimmung der effektiv druckwirksamen Fläche der Rollmembran auf die druckwirksamen Flächen des Dichtelements eine Neutralisierung der vom Saugaggregat erzeugten Kräfte erlaubt. Ganz konkret ist erkannt worden, dass sich sämtliche in Bewegungsrichtung des Dichtelements wirkenden Kräfte, die durch das Saugaggregat erzeugt werden, wegheben. Hierdurch ist erfindungsgemäß sichergestellt, dass das Ansprechverhalten, nämlich der Übergang des Dichtelements vom ruhenden in den bewegten Zustand, von den durch das Saugaggregat erzeugten Druckkräften entkoppelt werden kann. Das Ansprechverhalten kann somit sehr präzise auf die im Kurbelgehäuse vorherrschenden Druckverhältnisse abgestimmt werden.

Die Rollmembran und der Dichtsitz weisen den gleichen Wirkdurchmesser auf. Auf raffinierte Weise ist hierdurch sichergestellt, dass identische Wirkflächen mit Druckkräften beaufschlagt werden. In besonders vorteilhafter Weise wird eine gewölbte Oberfläche der Rollmembran, nämlich eine dynamisch veränderliche Oberfläche, auf eine unveränderliche, starre Oberfläche abgestimmt. Die starre Oberfläche, nämlich die druckwirksame Fläche, die dem Dichtsitz zugeordnet ist, wird durch den Durchmesser des Dichtsitzes bestimmt. Vorteilhaft wird durch Verwendung einer Rollmembran ein Dichtelement eingesetzt, welches einerseits beweglich und zugleich fluid- und druckdicht wirkt. Die Rollmembran könnte vor diesem Hintergrund aus einem Elastomer gefertigt sein.

Der zweite Druckraum ist durch einen Verbindungskanal mit der Atmosphäre verbindbar. Hierdurch ist es möglich, das Ansprechverhalten des Dichtelements abhängig von der Druckdifferenz zwischen Kurbelgehäuse und Atmosphäre einzustellen.

Folglich ist die eingangs genannte Aufgabe gelöst.

Der Dichtsitz könnte sich in Richtung der ersten Zuleitung verjüngen. Durch diese konkrete Ausgestaltung ist die Ausbildung einer Rampe möglich, auf welcher das Dichtelement anliegen kann. Durch geeignete Wahl des Verjüngungsverlaufs kann am Dichtelement eine druckwirksame Fläche erzeugt werden. Ganz konkret könnte die Verjüngung durch Ausbildung einer kegelstumpfförmigen Ausnehmung in der ersten Zuleitung ausgebildet sein. Diese Ausgestaltung lässt sich problemlos fertigen.

Das Dichtelement könnte topfförmig ausgebildet sein. Diese konkrete Ausgestaltung erlaubt die Ausbildung eines abkragenden Randbereichs, welcher an Rampen des Dichtsitzes anliegen kann. Die Ausdehnung des abkragenden Randbereichs kann auf die Rollmembran bzw. den Wirkdurchmesser der Rollmembran abgestimmt werden. Durch den Wirkdurchmesser der Rollmembran wird die effektiv druckwirksame Fläche der Rollmembran festgelegt. Das Dichtelement könnte zylindrisch und rotationssymmetrisch ausgebildet sein. Diese konkrete Ausgestaltung erlaubt eine problemlose und kostengünstige Fertigung des Dichtelements.

Die Rollmembran könnte an einer dem zweiten Druckraum zugewandten Fläche des Dichtelements angeordnet sein. Hierdurch ist sichergestellt, dass die Rollmembran von dem bewegten Dichtelement mitgenommen wird und zugleich den zweiten Druckraum gegen den ersten Druckraum abdichtet. Vor diesem Hintergrund ist denkbar, dass die Rollmembran nur an der Basisfläche des zylindrisch ausgebildeten und topfförmigen Dichtelements befestigt ist. Die Befestigung könnte beispielsweise durch einen Klebstoff oder durch Vulkanisieren erfolgen. Die ausschließliche Befestigung an der Basisfläche erlaubt ein Abrolten der Rollmembran an der Umfangsfläche bzw. der Wandung des zylindrischen und topfförmig ausgestalteten Dichtelements.

Dem Dichtelement könnte eine umlaufende Dichtlippe zugeordnet sein. Diese konkrete Ausgestaltung erlaubt ein nachträgliches Anbringen eines abkragenden Bereichs, nämlich der Dichtlippe, am Dichtelement. Die Dichtlippe kann auf die Verjüngung des Dichtsitzes abgestimmt sein. Vor diesem Hintergrund ist ganz konkret denkbar, dass die Dichtlippe aus einem elastomeren Material gefertigt ist. Elastomere Materialien zeichnen sich durch eine leichte Deformierbarkeit und hohe Elastizität aus, wodurch Unebenheiten dichtend ausgeglichen werden können. Insoweit ist es möglich, durch nicht eingehaltene Fertigungstoleranzen entstandene raue Bereiche am Dichtsitz auszugleichen. Hierdurch wird eine besonders hohe Dichtwirkung erzielt.

Das Dichtelement könnte durch eine Feder mit Kraft beaufschlagbar sein. Durch die Federkraft kann das Ansprechverhalten des Dichtelements eingestellt werden. Ganz konkret könnte als Feder eine Schraubenfeder verwendet werden, welche sich durch eine besonders große Robustheit auszeichnet. Das Dichtelement könnte dann vom ruhenden in den bewegten Zustand übergehen, wenn die Federkraft durch eine auftretende Druckdifferenz überwunden wird.

Dem Dichtelement könnte ein Anschlag zugeordnet sein. Diese konkrete Ausgestaltung erlaubt eine präzise axiale Führung des Dichtelements entlang des Anschlags. Des Weiteren ist der Anschlag von Vorteil, um eine Feder aufzunehmen. Schließlich kann durch einen Anschlag ein Hub vorgegeben werden, um den ein Dichtelement nach oben oder unten verfahrbar ist. In besonders vorteilhafter Weise kann der Anschlag dafür Sorge tragen, dass das Dichtelement nicht zu stark gegen den Dichtsitz gepresst wird. Eine zu starke Pressung des Dichtelements gegen den Dichtsitz bzw. die Rampen des Dichtsitzes könnte zu einer Deformierung der am Dichtelement anliegenden Dichtlippen und damit zu Leckagen führen.

Das Gehäuse könnte einen Deckel mit einer Nut umfassen, in welcher die Rollmembran mit verdickten Randbereichen eingelegt ist. Die Vorkehrung eines Deckels ist von Vorteil, um schadhaft gewordene Bauteile des Ventils auszutauschen. Die Vorkehrung einer Nut und die Ausbildung verdickter Randbereiche erlaubt eine besonders dichte Abtrennung des ersten Druckraums vom zweiten Druckraum, da die verdickten Randbereiche in der Nut verpresst werden können.

Dem Dichtelement und/ oder der ersten Zuleitung könnten Mittel derart zugeordnet sein, dass ein Strömungskanal bei Bewegung des Dichtelements in seiner Weite veränderbar ist. Hierdurch ist eine mechanische Drosselregelung einer Fluidströmung durch den Strömungskanal möglich. Die Weite des Strömungskanals ist eine Funktion des Hubs bzw. der Position des Dichtelements. Hierdurch können Ansaugkräfte reduziert werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels des erfindungsgemäßen Ventils anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer Schnittzeichnung ein Ventil, bei welchem die Rollmembran und das Dichtelement druckwirksame Flächen derart ausbilden, dass die am Dichtelement angreifenden Druckkräfte innerhalb eines ersten Druckraums zumindest teilweise kompensiert werden, und
- Fig. 2: in einer Schnittzeichnung ein Ventil mit einem Dichtelement, welches eine kegelstumpfförmige Wandung aufweist, die mit einer kegelstumpfförmigen Wandung der ersten Zuleitung korrespondiert.

### Ausführung der Erfindung

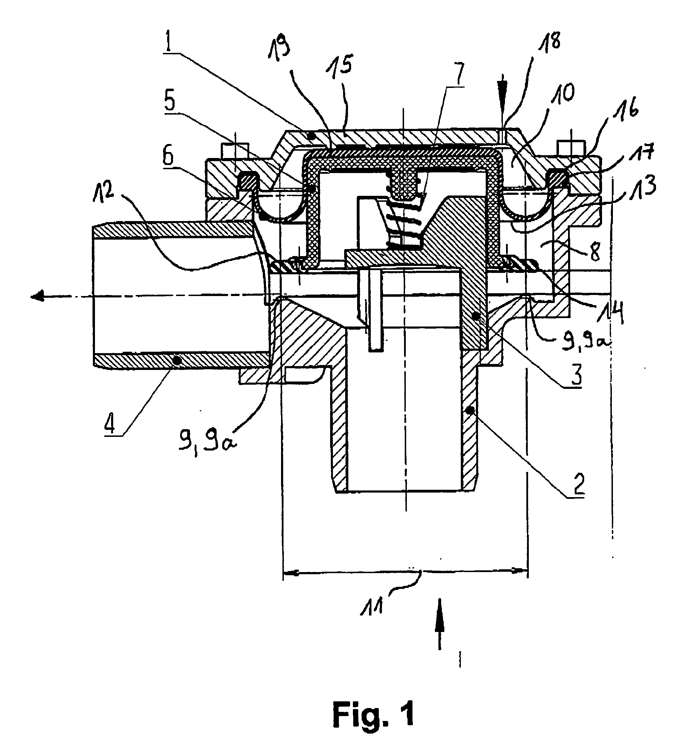

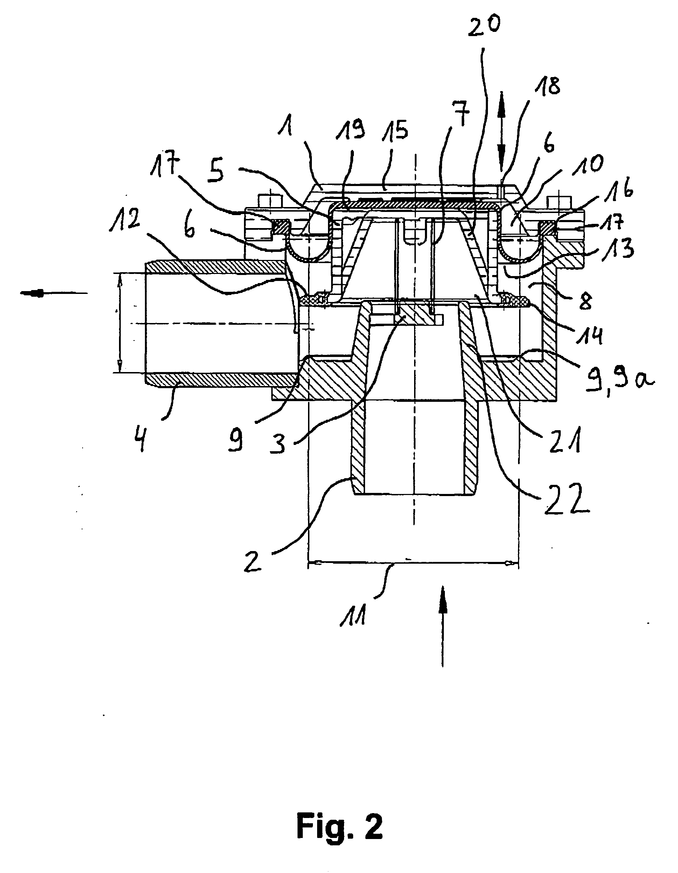

Die Fig. 1 und 2 zeigen jeweils ein Ventil mit einem Gehäuse 1, wobei das Gehäuse 1 eine erste Zuleitung 2 und eine zweite Zuleitung 4 zu einem ersten Druckraum 8 umfasst. Die Zuleitungen 2, 4 sind durch ein bewegliches Dichtelement 5 strömungsverbindbar, welches auf einem Dichtsitz 9 anlegbar ist. An dem Dichtelement 5 ist eine Rollmembran 6 festgelegt, die den ersten Druckraum 8 von einem zweiten Druckraum 10 fluiddicht abtrennt. Die Rollmembran 6 und das Dichtelement 5 bilden dem ersten Druckraum 8 zugewandte druckwirksame Flächen 13, 12 derart aus, dass die am Dichtelement 5 angreifenden Druckkräfte innerhalb des ersten Druckraums 8 zumindest teilweise kompensiert werden.

Ganz konkret ist die erste Zuleitung 2 einem nichtgezeigten Kurbelgehäuse zuordenbar, in dem sich ein Druck aufbauen kann, der über einem gewünschten Druckniveau liegt, Dieses Druckniveau liegt üblicherweise 10 bis 25 Hektopascal unter dem Atmosphärendruck. Der Überdruck wirkt in Richtung des senkrecht nach oben zeigenden Pfeils.

Die zweite Zuleitung 4 ist mit einem nichtgezeigten Saugaggregat, beispielsweise einem Verbrennungsmotor eines Kraftfahrzeugs, verbindbar. Das Saugaggregat erzeugt einen Unterdruck und zieht die Gase aus dem Kurbelgehäuse in Richtung des Saugaggregats ab. Dies ist dann der Fall, wenn das Dichtelement 5 die erste Zuleitung 2 mit der zweiten Zuleitung 4 strömungsverbunden hat. In der einzigen Figur ist ein Ventil gezeigt, welches sich im geöffneten Zustand befindet.

Im geschlossenen Zustand liegt das Dichtelement 5 auf dem Dichtsitz 9 an.

Die Rollmembran 6 und der Dichtsitz 9 weisen den gleichen Wirkdurchmesser 11 auf. Im geschlossenen Zustand herrscht im ersten Druckraum 8 der Druck vor, der durch das Saugaggregat erzeugt wird. Dieser Druck wirkt auf die druckwirksamen Flächen 12 und 13 des Dichtelements 5 bzw. der Rollmembran 13. Die durch den Druck erzeugten Kräfte heben sich gegenseitig auf.

Das Dichtelement 5 ist zylindrisch und topfförmig ausgebildet, Die Rollmembran 6 ist an einer dem zweiten Druckraum 10 zugewandten Fläche 19 des Dichtelements 5 angeordnet. Die Fläche 19 ist die Basisfläche des zylindrisch ausgestalteten Dichtelements 5.

Dem Dichtelement 5 ist eine umlaufende Dichtlippe 14 zugeordnet, welche den auskragenden Bereich des topfförmigen Dichtelements 5 definiert. Die Dichtlippe 14 kommt an der umlaufenden Rampe 9a des Dichtsitzes 9 zur Anlage.

Das Dichtelement 5 ist durch eine Feder 7 mit Kraft beaufschlagbar. Die Feder 7 drückt das Dichtelement 5 gegen den Deckel 15 des Gehäuses 1. Dem Dichtelement 5 ist ein Anschlag 3 zugeordnet, an welchem die Feder 7 anliegt. In Fig. 1 führt der Anschlag 3 die Bewegung des Dichtelements 5 in Richtung dessen Symmetrieachse.

Das Gehäuse 1 umfasst einen Deckel 15 mit einer Nut 16, in welcher die Rollmembran 6 mit verdicktem Randbereich 17 eingelegt ist. Durch Verpressen des verdickten Randbereichs 17 wird eine dichte Trennung des ersten Druckraums 8 vom zweiten Druckraum 10 hergestellt.

Der zweite Druckraum 10 ist durch einen Verbindungskanal 18 mit der Atmosphäre verbunden. Hierdurch herrscht im zweiten Druckraum 10 Atmosphärendruck.

In Fig. 1 verjüngt sich der Dichtsitz 9 in Richtung der ersten Zuleitung 2. Die Verjüngung ist in Form einer kegelstumpfförmigen Ausnehmung in der ersten Zuleitung 2 ausgebildet. Der Dichtsitz 9 weist Rampen 9a auf, an denen das Dichtelement im geschlossenen Zustand des Ventils zur Anlage kommt.

Fig. 2 zeigt ein Ventil mit einem Dichtelement 5, welchem Mittel 20 zugeordnet sind, die in Abhängigkeit vom Hub des Dichtelements 5 die Weite eines Strömungskanals 21 einstellen. Die Durchtrittsfläche des Strömungskanals 21 ist kreisringförmig ausgestaltet. Ganz in Abhängigkeit von der Stellung des Dichtelements 5 wird die Weite des Strömungskanals 21 verändert. Die Mittel 20 sind als kegelstumpfförmige Wandung 20 ausgestattet, die im Innenraum des Dichtelements 5 angeordnet ist. Diese Wandung 20 korrespondiert mit einer ebenfalls kegelstumpfförmigen Wandung 22, die der ersten Zuleitung 2 zugeordnet ist. Die Neigungen der Wandungen 20, 22 sind unterschiedlich.

Die Wirkungsweise der in Fig. 1 und 2 gezeigten Ventile ist wie folgt:

Der Atmosphärendruck innerhalb des zweiten Druckraums 10 drückt das Dichtelement 5 gegen die Kraft der Feder 7 gegen den Dichtsitz 9. In diesem Zustand ist das Ventil geschlossen. Wenn der Druck im Kurbelgehäuse und damit in der ersten Zuleitung 2 über einen durch die Federkraft und den Atmosphärendruck exakt definierten Wert ansteigt, wird das Dichtelement 5 angehoben und stellt eine Strömungsverbindung zwischen der ersten Zuleitung 2 und der zweiten Zuleitung 4 her. Sowohl der Atmosphärendruck als auch der Druck innerhalb des Kurbelgehäuses wirken auf eine druckwirksame Kreisfläche, die den Durchmesser 11 aufweist.

Wenn das Dichtelement 5 am Dichtsitz 9 anliegt, wirkt der vom Saugaggregat erzeugte Druck innerhalb der ersten Zuleitung 4 auf kreisringförmige Flächen 12 und 13 mit einem äußeren Durchmesser 11, nämlich dem Wirkdurchmesser 11.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

## Patentansprüche

1. Ventil mit einem Gehäuse (1), wobei das Gehäuse (1) eine erste Zuleitung (2) und eine zweite Zuleitung (4) zu einem ersten Druckraum (8) umfasst, wobei die Zuleitungen (2, 4) durch ein bewegliches Dichtelement (5) strömungsverbindbar sind, welches auf einem Dichtsitz (9) anlegbar ist, wobei an dem Dichtelement (5) eine Rollmembran (6) festgelegt ist, die den ersten Druckraum (8) von einem zweiten Druckraum (10) fluiddicht abtrennt, wobei die Rollmembran (6) und der Dichtsitz (9) den gleichen Wirkdurchmesser (11) aufweisen und wobei die Rollmembran (6) und das Dichtelement (5) dem ersten Druckraum (8) zugewandte druckwirksame Flächen (13, 12) derart ausbilden, dass die am Dichtelement (5) angreifenden Druckkräfte innerhalb des ersten Druckraums (8) kompensiert werden, **dadurch gekennzeichnet, dass** der zweite Druckraum (10) durch einen Verbindungskanal (18) mit der Atmosphäre verbindbar ist.

2. Ventil nach Anspruch 1, **dadurch gekennzeichnet, dass** der Dichtsitz (9) sich in Richtung der ersten Zuleitung (2) verjüngt.

3. Ventil nach Anspruch 1 oder 2, **dadurch gekennzeichnet, dass** das Dichtelement (5) topfförmig ausgebildet ist.

4. Ventil nach einem der Ansprüche 1 bis 3, **dadurch gekennzeichnet, dass** die Rollmembran (6) an einer dem zweiten Druckraum (10) zugewandten Fläche (19) des Dichtelements (5) angeordnet ist.

5. Ventil nach einem der Ansprüche 1 bis 4, **dadurch gekennzeichnet, dass** dem Dichtelement (5) eine umlaufende Dichtlippe (14) zugeordnet ist.

6. Ventil nach einem der Ansprüche 1 bis 5, **dadurch gekennzeichnet, dass** das Dichtelement (5) durch eine Feder (7) mit Kraft beaufschlagbar ist.

7. Ventil nach einem der Ansprüche 1 bis 6, **dadurch gekennzeichnet, dass** dem Dichtelement (5) ein Anschlag (3) zugeordnet ist.

8. Ventil nach einem der Ansprüche 1 bis 7, **dadurch gekennzeichnet, dass** das Gehäuse (1) einen Deckel (15) mit einer Nut (16) umfasst, in welcher die Rollmembran (6) mit verdickten Randbereichen (17) eingelegt ist.

9. Ventil nach einem der Ansprüche 1 bis 8, **dadurch gekennzeichnet, dass** dem Dichtelement (5) und/ oder der ersten Zuleitung (2) Mittel (20, 22) derart zugeordnet sind, dass ein Strömungskanal (21) bei Bewegung des Dichtelements (5) in seiner Weite veränderbar ist.

## Claims

1. Valve with a housing (1), wherein the housing (1) comprises a first inlet line (2) and a second inlet line (4) to a first pressure chamber (8), wherein the inlet lines (2, 4) can be connected in terms of flow by a moveable sealing element (5) which can be placed on a sealing seat (9), wherein a rolling membrane (6) which separates the first pressure chamber (8) from a second pressure chamber (10) in a fluid-tight manner is fastened to the sealing element (5), wherein the rolling membrane (6) and the sealing seat (9) have the same effective diameter (11), and wherein the rolling membrane (6) and the sealing element (5) form pressure-effective surfaces (13, 12) facing the first pressure chamber (8) such that the pressure forces inside the first pressure chamber (8) which act on the sealing element (5) are compensated for, **characterized in that** the second pressure chamber (10) can be connected to the atmosphere through a connecting duct (18).

2. Valve according to Claim 1, **characterized in that** the sealing seat (9) narrows in the direction of the first inlet line (2).

3. Valve according to Claim 1 or 2, **characterized in that** the sealing element (5) is of pot-shaped design.

4. Valve according to one of Claims 1 to 3, **characterized in that** the rolling membrane (6) is arranged on a surface (19) of the sealing element (5) that faces the second pressure chamber (10).

5. Valve according to one of Claims 1 to 4, **characterized in that** the sealing element (5) is assigned a peripheral sealing lip (14).

6. Valve according to one of Claims 1 to 5, **characterized in that** the sealing element (5) can have a force applied to it by means of a spring (7).

7. Valve according to one of Claims 1 to 6, **characterized in that** the sealing element (5) is assigned a stop (3).

8. Valve according to one of Claims 1 to 7, **characterized in that** the housing (1) comprises a cover (15) having a groove (16) in which the rolling membrane (6) is inserted by way of thickened edge regions (17).

9. Valve according to one of Claims 1 to 8, **characterized in that** the sealing element (5) and/or the first inlet line (2) are assigned means (20, 22) such that a flow duct (21) can be varied in its width during movement of the sealing element (5).

## Revendications

1. Soupape comprenant un boîtier (1), le boîtier (1) comprenant une première conduite d'amenée (2) et une deuxième conduite d'amenée (4) allant à un premier espace de pression (8), les conduites d'amenée (2, 4) pouvant être connectées fluidiquement par un élément d'étanchéité mobile (5) qui peut être appliqué sur un siège d'étanchéité (9), une membrane à enroulement (6) étant fixée sur l'élément d'étanchéité (5), laquelle sépare, de manière étanche aux fluides, le premier espace de pression (8) d'un deuxième espace de pression (10), la membrane à enroulement (6) et le siège d'étanchéité (9) présentant le même diamètre efficace (11) et la membrane à enroulement (6) et l'élément d'étanchéité (5) constituant des surfaces (13, 12) actives en pression tournées vers le premier espace de pression (8) de telle sorte que les forces de pression s'exerçant sur l'élément d'étanchéité (5) soient compensées à l'intérieur du premier espace de pression (8), **caractérisée en ce que** le deuxième espace de pression (10) peut être connecté à l'atmosphère par un canal de connexion (18).

2. Soupape selon la revendication 1, **caractérisée en ce que** le siège d'étanchéité (9) se rétrécit dans la direction de la première conduite d'amenée (2).

3. Soupape selon la revendication 1 ou 2, **caractérisée en ce que** l'élément d'étanchéité (5) est réalisé en forme de pot.

4. Soupape selon l'une quelconque des revendications 1 à 3, **caractérisée en ce que** la membrane à enroulement (6) est disposée sur une surface (19) de l'élément d'étanchéité (5) tournée vers le deuxième espace de pression (10).

5. Soupape selon l'une quelconque des revendications 1 à 4, **caractérisée en ce que** l'on associe une lèvre d'étanchéité périphérique (14) à l'élément d'étanchéité (5).

6. Soupape selon l'une quelconque des revendications 1 à 5, **caractérisée en ce que** l'élément d'étanchéité (5) peut être sollicité par force par un ressort (7).

7. Soupape selon l'une quelconque des revendications 1 à 6, **caractérisée en ce que** l'on associe une butée (3) à l'élément d'étanchéité (5).

8. Soupape selon l'une quelconque des revendications 1 à 7, **caractérisée en ce que** le boîtier (1) comprend un couvercle (15) avec une rainure (16), dans laquelle la membrane à enroulement (6) est introduite avec des régions de bord épaissies (17).

9. Soupape selon l'une quelconque des revendications 1 à 8, **caractérisée en ce que** l'on associe à l'élément d'étanchéité (5) et/ou à la première conduite d'amenée (2) des moyens (20, 22), de telle sorte que la largeur d'un canal d'écoulement (21) puisse être modifiée lors du déplacement de l'élément d'étanchéité (5).
